# EUROPEAN PATENT SPECIFICATION

(11) **EP 0 891 399 B1**
(45) Date of publication and mention of the grant of the patent: **15.12.1999**
(21) Application number: 97915477.0
(22) Date of filing: 02.04.1997
(51) Int. Cl.: C09D 9/00

(54) **NEUTRAL REMOVERS OF PAINT FROM ESSENTIALLY METALLIC SURFACES**
NEUTRALE LACKENTFERNUNGSMITTEL FÜR METALLOBERFLÄCHEN
DECAPANTS NEUTRES POUR ENLEVER UNE PEINTURE A PARTIR DE SURFACES ESSENTIELLEMENT METALLIQUES

(30) Priority: 05.04.1996 IT MI960673
(43) Date of publication of application: 20.01.1999
(73) Proprietor: Ve.Co S.R.L., 5028 Quattordio (IT)
(72) Inventor: CORDERO, Francesco, I-15028 Quattordio (IT)
(74) Representative: Gervasi, Gemma, Dr.
(86) International application number: EP9701654
(87) International publication number: WO9738057

(56) References cited:
- WO-A-88/06640
- WO-A-94/15727
- US-A- 5 106 525
- US-A- 5 154 848
- US-A- 5 215 675

## Description

### Field of the invention

The present invention relates to neutral compositions capable of removing resinous coatings from essentially metallic substrates.

### State of the art

As paints based on catalysed epoxy and polyurethane resins, containing heavy metals, and paint primers containing chromates, phosphates and other inhibitory pigments are used to coat aircraft's metallic surfaces, there is a need for suitable paint removers capable of thoroughly eliminating said paints from the aircraft being overhauled, without corroding their metallic surface.

The acid-based paint removers available eliminate said coatings effectively, but can corrode the metallic surface of the substrate. Also basic paint removers based on ammonia were used, but proved to be ineffective for said paints.

The best state-of-the-art removers of paints consisting of epoxy and polyurethane resins are based on methylene chloride. However, said solvent, which is highly volatile, creates serious pollution problems especially when used for paint removal from large-sized metallic surfaces, as aircraft's. Furthermore, it is suspected of being carcinogenic.

Finally, methylene chloride is very fast acting but, due to its volatility, exerts an action of short duration. It follows that, when a thick paint layer is to be removed, repeated applications are necessary.

To overcome the aforementioned disadvantages inherent in the use of methylene chloride, paint removers with methylene chloride replaced partly or completely by N-alkylpyrrolidone have been proposed. However, said solvents exhibit a much reduced paint removing action since they contain hydrogen lactam which forms hydrogen bonds with water.

USP 3,355,385 discloses that ketones, such as acetone and methylethylketone, combined with peroxides, exhibit an adequate paint removing action. However, also these solvents, like methylene chloride, are highly volatile and, consequently, little effective. Therefore, the need for paint removers not having the disadvantages of the removers of the prior art and, at the same time, not arousing serious problems of environmental impact and, furthermore, being biodegradable, is deeply felt.

International patent application WO 93/18865 discloses a neutral paint removing composition containing hydrogen peroxide and a water-soluble solvent consisting of a short-chain acid ester, such as gamma-butyrolactone.

As gamma-butyrolactone is rather expensive, with a view to reducing the cost of said composition, the aforementioned patent application envisages the use of a second solvent selected from alkylene glycols, alcohols, such as for example cyclohexanol, tetrahydrofurfuryl alcohol, substituted lactams, such as N-methylpyrrolidone, as well as specific hydrocarbons.

According to the aforesaid patent application, the gamma-butyrolactone content must equal at least 25% and the cosolvent content, if any, must be lower than 20%; otherwise the paint removing action of the relevant composition will be low.

### The present invention

The Applicant has now found compositions capable of completely removing resinous coatings from essentially metallic substrates, containing hydrogen peroxide and gamma-butyrolactone and being characterized by the presence of benzyl alcohol as main organic solvent, the content of said gamma-butyrolactone being lower than or equal to 20% by wt. of the total weight of said compositions.

In particular, the compositions of the present invention comprise:
a) 5% to 30% by wt. hydrogen peroxide;
b) 20% to 50% by wt. water;
c) 5% to 20% by wt. gamma-butyrolactone;
d) 20% to 50% by wt. benzyl alcohol.

Furthermore, the compositions being the object of the present invention are non-corrosive, biodegradable, and, thanks to their high flash point (approx. 100°C) may be handled in an easy way.

Also, this invention extends to the use of said compositions to remove primers and finishes consisting of polyurethane and epoxidic paints from large-sized metallic surfaces, like aircraft's, which in particular are constructed of aluminium alloys.

The claimed compositions can also remove acrylic and vinyl paints.

### Detailed description of the invention

The compositions of the invention may optionally contain at least one of the following types of additives, such as for example corrosion inhibitors, thickeners, surfactants, and colouring agents.

The compositions of the present invention preferably contain at least one of the following thickeners: cellulosic derivatives (such as hydroxypropyl cellulose, ethylcellulose, methylcellulose), pyrogenic amorphous silica treated for water repellency, at least one polyacrylamide dispersion in mineral oil, aqueous dispersions of acrylic polymers, and aqueous emulsions of non-ionogenic polyurethanes.

According to a particularly preferred embodiment of the present invention, the compositions contain a mixture of the following components: cellulosic derivatives, silica, and aqueous dispersions of acrylic polymers or aqueous suspensions of non-ionogenic polyurethanes.

In this specific case, the cellulosic derivative used is hydroxypropyl cellulose having an average molecular weight of 100,000 to 1,200,000, available under the trademark KLUCEL®, in concentrations ranging from 0.1 to 3% by wt., the acrylic polymers aqueous dispersions preferably used are those available under the trademark RHEOLATE®, the polyurethane aqueous emulsions preferably used are those available under the trademark REOX®; the concentration of said acrylic polymers aqueous dispersions or of said polyurethanes aqueous emulsions shall not exceed 5%.

The quantity of silica added as a thickener and as antidripping agent ranges from 0.1% to 2% of the total weight of the composition. The aforesaid acrylic polymers aqueous dispersions and polyurethanes aqueous emulsions may be replaced by two different types of polyacrylamide dispersions in mineral oil, available under the trademarks VISCALEX® and COLLAFIX®, respectively, the total concentration of said dispersions having to range from 1% to 5% by wt. of the total weight of the composition.

The claimed compositions contain at least one of the following corrosion inhibitors: butynediol hydroxyethylethers, gallic and metadigallic acid glycosidic esters, calcium silicate, sodium polyphosphate, thiourea in propargyl alcohol in a concentration of 50%, and the metallic phosphates generally used in paints.

According to a preferred embodiment of the present invention, the compositions contain: 1,4-bis(2-hydroxyethoxy)-2-butyne, available under the trademark BUTYNE® 497, sodium polyphosphate, thiourea in propargyl alcohol, available under the trademark ARMOHIB®, and calcium silicate, available under the trademark SHIELDEX®, the total amount of each corrosion inhibitor having to range from 2% to 10%. According to particularly preferred embodiments of the present invention, the compositions contain the following corrosion inhibitors: zinc phosphate activated with zinc molybdate, available under the trademark ACTIROX®, zinc phosphate modified with organic components, available under the trademark HEUCOPHOS®, or mixtures thereof, and optionally the aforementioned 1,4-bis(2-hydroxyethoxy)-2-butyne, available under the trademark BUTYNE® 497; the total concentration of said corrosion inhibitors in the final composition shall not exceed 15% by wt.

The use of the aforesaid corrosion inhibitors implies the use of metallic borates having the function to activate said corrosion inhibitors. The following borates, in concentrations of 10% by wt. max., are preferably used: modified barium metaborate, available under the trademark BUTROL® and zinc borate.

The claimed compositions preferably contain at least one of the following surfactants: N-alkyl-pyrrolidone, in which the alkyl group contains 8 to 18 carbon atoms, and sodium caprylamphohydroxypropylsulphonate.

According to a particularly preferred embodiment of the present invention, the compositions contain a mixture of N-dodecyl-pyrrolidone, available under the trademark SURFADONE®, and sodium caprylamphohydroxypropylsulphonate, available under the trademark MIRANOL®, the total concentration of said surfactants having to range from 1% to 5% of the total weight of said compositions.

The claimed compositions may optionally contain small amounts of colourant, preferably a pigment based on iron oxides in water, in a concentration of 0.01% to 0.1%.

The compositions of the present invention are preferably formulated in the form of two separate components, A and B, which may be mixed immediately prior to use, wherein component A contains benzyl alcohol, gamma-butyrolactone and optionally at least one of the additives mentioned above, and component B consists of a 35% aqueous solution of hydrogen peroxide.

The Applicant has found that the composition of the invention formulated in the two-component form is an effective paint remover for a long time, actually for 6 to 12 months.

Components A and B will be so formulated that benzyl alcohol, gamma-butyrolactone, water, and hydrogen peroxide concentrations in the final compositions of the invention are within the aforementioned ranges.

It is a further object of the present invention to provide a process for the application of the claimed two-component compositions consisting of the following steps:
i) components A and B, in weight ratios ranging from 100:50 to 100:30, preferably 100:40, are fed through separate suction pumps to an appropriate mixer where mixing of the two components takes place;
ii) the resulting composition is applied by spray gun to the substrate wherefrom the paint is to be removed.

The compositions of the present invention are to remain on the films of paint until they are completely detached from the supports. Washing with a jet of water is enough to eliminate both paint and paint removing compositions, while brushes or similar tools may be used to remove resinous residues, if any.

The following examples relating to the preparation and application of a particularly preferred composition of the invention as well as the paint removing tests conducted on said composition are reported below by way of indication, not of limitation, of the present invention.

### EXAMPLE 1

| **Preparation of component A** | | |
|---|---|---|
| | | Parts by wt. |
| 1) | benzyl alcohol | 573 |
| 2) | gamma-butyrolactone | 244 |
| 3) | KLUCEL® (hydroxypropyl cellulose) | 14 |
| 4) | BUTYNE 497® (1,4-bis(2-hydroxyethoxy)-2-butyne) | 22 |
| 5) | ARMOHIB 18® (thiourea in propargyl alcohol) | 20 |
| 6) | MIRANOL JS® (caprylamphohydroxypropylsulphonate) | 30 |
| 7) | SURFADONE LP-300® (N-dodecyl-pyrrolidone) | 10 |
| 8) | water | 20 |
| 9) | sodium polyphosphate | 10 |
| 10) | RED AW 305® (water iron oxide) | 1 |
| 11) | SHIELDEX AC 5® (calcium silicate) | 20 |
| 12) | CAB-0-SIL TS 720® (water repellent amorphous silica) | 8 |
| 13) | VISCALEX AT 77® (polyacrylamide dispersion in mineral oil) | 14 |
| 14) | COLLAFIX PAP 404® (polyacrylamide dispersion in mineral oil) | 14 |
| | **TOTAL** | **1000** |

Component A was prepared by slowly adding the cellulosic thickener to the benzyl alcohol/gamma-butyrolactone mixture with continued stirring.

Once cellulose dissolution had been completed, the aforesaid components were added according to the numerical order indicated above until a homogeneous product was obtained.

| **Component B** | |
|---|---|
| | Parts by wt. |
| 35% hydrogen peroxide (aqueous solution, 130 vol.) | 1000 |

### Process for the preparation and application of the final composition

The aforesaid formulations A and B, in a ratio equal to 100:40 by wt., were fed through separate suction pumps to an appropriate mixer where said components were mixed for approx. 5 sec.

The resulting composition was applied by spray gun to the substrate wherefrom the paint had to be removed.

### EXAMPLE 2

| **Preparation of component A** | | |
|---|---|---|
| | | Parts by wt. |
| 1) | benzyl alcohol | 550 |
| 2) | gamma-butyrolactone | 250 |
| 3) | KLUCEL® (hydroxypropyl cellulose) | 14 |
| 4) | ACTIROX 102® (zinc phosphate and zinc molybdate) | 47 |
| 5) | HEUCOPHOS® ZPZ (zinc phosphate modified with an organic component) | 9 |
| 6) | BUTROL® 23 (modified barium metaborate) | 9 |
| 7) | zinc borate | 9 |
| 8) | CAB-0-SIL TS 720® (water repellent amorphous silica) | 13 |
| 9) | BUTYNE 497® (1,4-bis(2-hydroxyethoxy)-2-butyne) | 56 |
| 10) | REOX® (50% non-ionogenic polyurethane in 60/40 water-butyl glycol mixture) | 42 |
| 11) | RED AW 305® (water iron oxide) | 1 |

| **Component B** | |
|---|---|
| | Parts by wt. |
| 35% hydrogen peroxide (aqueous solution 130 vol.) | 1000 |

### Process for the preparation and application of the final composition

The aforesaid formulations A and B, in a ratio equal to 100:40 by wt., were fed through separate suction pumps to an appropriate mixer where said components were mixed for approx. 5 sec.

The resulting composition was applied by spray gun to the substrate wherefrom the paint had to be removed.

### EXAMPLE 3

| **Preparation of component A** | | |
|---|---|---|
| | | Parts by wt. |
| 1) | benzyl alcohol | 550 |
| 2) | gamma-butyrolactone | 250 |
| 3) | KLUCEL® (hydroxypropyl cellulose) | 14 |
| 4) | ACTIROX 102® (zinc phosphate and zinc molybdate) | 41 |
| 5) | BUTROL® 23 (modified barium metaborate) | 41 |
| 6) | zinc borate | 41 |
| 7) | CAB-0-SIL TS 720® (water repellent amorphous silica) | 13 |
| 8) | RHEOLATE® 420 (30% by wt. acrylic polymer aqueous emulsion) | 42 |
| 9) | RED AW 305® (water iron oxide) | 1 |

| **Component B** | |
|---|---|
| | Parts by wt. |
| 35% hydrogen peroxide (aqueous solution 130 vol.) | 1000 |

### Process for the preparation and application of the final composition

The aforesaid formulations A and B, in a ratio equal to 100:40 by wt., were fed through separate suction pumps to an appropriate mixer where said components were mixed for approx. 5 sec.

The resulting composition was applied by spray gun to the substrate wherefrom the paint had to be removed.

### EXAMPLE 4

| **Component A** | | |
|---|---|---|
| | | Parts by wt. |
| 1) | benzyl alcohol | 545.171 |
| 2) | gamma-butyrolactone | 233.644 |
| 3) | KLUCEL® (hydroxypropyl cellulose) | 13.200 |
| 4) | ACTIROX 102® (zinc phosphate and zinc molybdate) | 119.048 |
| 5) | BUTYNE® 497 (1,4 bis 2-hydroxy-ethoxy)-2-butyne | 39.683 |
| 6) | REOX 2000® (50% non ionogenic polyurethane in 60/40 water-butyl glycol mixture) | 30.000 |
| 7) | CAB-0-SIL TS 720® (water repellent amorphous silica) | 19.154 |
| 8) | RED AW 305^{R} (water iron oxide) | 0.100 |

| **Component B** | |
|---|---|
| | Parts by wt. |
| 35% hydrogen peroxide (aqueous solution 130 vol.) | 1000 |

### Preparation of component A

Component A is prepared by slowly adding the cellulosic thickener to the mixture benzylalcohol-gammabutyrolactone maintained under stirring.

Once the dissolution of the cellulosic derivative is completed, the corrosion inhibitors are added to the mixture maintained under stirring. Once these compounds are uniformly dispersed, the remaining thickeners and the colouring agents are finally added, the mixture is maintained under stirring until obtaining a homogeneous composition.

### Process for the preparation and application of the final composition

The aforesaid formulations A and B, in a ratio equal to 100:40 by wt., were fed through separate suction pumps to an appropriate mixer where said components were mixed for approx. 5 sec.

The resulting composition was applied by spray gun to the substrate wherefrom the paint had to be removed.

### Paint removing test

With a view to checking the paint removing action of the product, some tests were conducted on panels of aluminium alloy 2024 T3, 0.5 mm thick, from AD AEROSPACE VoF, Sassenheim, painted according to one of the following four painting systems:

### System 1 (cf. specification NT 10113)

The panel was treated with a composition available under the trademark METAFLEX FOR® to clean and degrease the metallic surface before primer application.

The surface was then coated with a layer of isocianate-catalysed epoxy polyurethane primer, available under the trademark AERODUR CF 37047 ^{R} and finally with an isocianate-catalysed polyurethane finish available under the trademark AERODUR C21/100 UVR®,

### System 2 (cf. specification BMS 10-60)

The panel was treated with a composition available under the trademark ALODINE 1200® to clean and degrease the metallic surface before primer application.

The surface was then coated with a polyamide-catalysed epoxy primer denominated EPOXY PRIMER 37076 and finally with the same isocianate-catalysed polyurethane finish as used in System 1.

### System 3

The panel surface was anodized with chromic acid and coated first with an epoxy primer (EPOXY PRIMER 37057 NF), then with an isocianate-catalysed polyurethane layer, available under the trademark AERODUR SEALER 142228 ®, and finally with a finish based on the same polyurethane as used in Systems 1 and 2.

### System 4 (cf. specification BMS 10-72, type VI)

The metallic surface of the panel was treated with ALODINE 1200 ^{R} as used in System 2, coated with a polyamide-catalysed epoxy primer, denominated 10-P20-12, and finally with a isocianate-catalysed polyurethane finish, available under the trademark AVIOX®

Panels were 25 cm x 30 cm in size. Prior to product application, the panel had been divided into four sectors to avoid that superficial imperfections (lower thickness of the film of paint, manufacturing defects, etc.), if any, might alter the results of the test. Each sector was coated with approx. 5 g of paint remover prepared as described in Example 1. The panel was positioned vertically to simulate the position of the aircraft surface. After treatment, the panels were maintained at ambient temperature and humidity until the film of paint was completely detached; they were then washed with a jet of water. The paint removing action was assessed vs. the percentage of paint removed.

The results obtained are shown in Table 1: the time of paint removal is expressed as a time interval, to include the time required for removing the paint from all four sectors.

**Table 1**

| **Panel type** | **% Removal** | **Time** |
|---|---|---|
| System 1 | 100 | 2-3 h |
| System 2 | 100 | 4-6 h |
| System 3 | 100 | 2-3 h |
| System 4 | 100 | 1-1 h 20' |

## Claims

1. Compositions capable of completely removing resinous coatings from essentially metallic substrates, containing hydrogen peroxide and gamma-butyrolactone and being characterized by the presence of benzyl alcohol as main organic solvent, the content of said gamma-butyrolactone being lower than or equal to 20% by wt. of the total weight of said compositions.

2. Compositions capable of completely removing resinous coatings from essentially metallic substrates, containing:
a) from 5% to 30% by wt. hydrogen peroxide;
b) from 20% to 50% by wt. water;
c) from 5% to 20% by wt. gamma-butyrolactone;
d) from 20% to 50% by wt. benzyl alcohol.

3. The compositions as claimed in claim 2 containing at least one of the following types of additives: corrosion inhibitors, thickeners, surfactants, and colouring agents.

4. The compositions as claimed in claim 3 containing at least one of the following types of thickeners: cellulosic derivatives, pyrogenic amorphous silica treated for water repellency, at least one polyacrylamide dispersion in mineral oil, aqueous dispersions of acrylic polymers or aqueous emulsions of non-ionogenic polyurethanes.

5. The compositions as claimed in claim 3, wherein the cellulosic derivatives are selected from the group consisting of hydroxypropyl cellulose, ethylcellulose, methylcellulose.

6. The compositions as claimed in claim 4, containing at the same time:
- 0.1% to 3% by wt., calculated on the total weight of said compositions, of hydroxypropyl cellulose having an average molecular weight ranging from 100,000 to 1,200,000;
- 0.1% to 2% by wt., calculated on the total weight of said compositions, of amorphous silica made water repellent with silicone oil;
- 1% to 5% by wt., calculated on the total weight of said compositions, of one or more polyacrylamide dispersions in mineral oil.

7. The compositions as claimed in claim 4 containing at the same time:
- 0.1% to 3% by wt., calculated on the total weight of said compositions, of hydroxypropyl cellulose having an average molecular weight ranging from 100,000 to 1,200,000;
- 0.1% to 2% by wt., calculated on the total weight of said compositions, of amorphous silica made water repellent with silicone oil;
- aqueous dispersions of acrylic polymers or polyurethane aqueous emulsions, provided that the concentration of said aqueous dispersions or emulsions does not exceed 5%.

8. The compositions as claimed in claim 3 containing at least one of the following types of corrosion inhibitors: butynediol hydroxyethylethers, gallic and metadigallic acid glycosidic esters, calcium silicate, sodium polyphosphate, thiourea in propargyl alcohol in 50% concentration, and metallic phosphates.

9. The compositions as claimed in claim 8 containing the following corrosion inhibitors: 1,4-bis(2-hydroxyethoxy)-2-butyne, sodium polyphosphate, thiourea in propargyl alcohol, and calcium silicate, the total concentration of each corrosion inhibitor having to range from 2% to 10% by wt. of the total weight of said compositions.

10. The compositions as claimed in claim 8 containing the following corrosion inhibitors: zinc phosphate activated with zinc molybdate, zinc phosphate modified with an organic component, or mixtures thereof, and optionally 1,4-bis(2-hydroxyethoxy)-2-butyne, the total concentration of said corrosion inhibitors in the final composition having not to exceed 15% by wt.

11. The compositions as claimed in claim 10 containing also metallic borates in concentrations lower than or equal to 10% by wt.

12. The compositions as claimed in claim 3 containing at least one of the following types of surfactants: N-alkyl-pyrrolidone, in which the alkyl group contains 8 to 18 carbon atoms, and sodium caprylamphohydroxypropylsulphonate.

13. The compositions as claimed in claim 12 containing the following surfactants: N-dodecyl-pyrrolidone and sodium caprylamphohydroxypropylsulphonate, the total concentration of said surfactants having to range from 1% to 5% of the total weight of said compositions.

14. The compositions as claimed in claim 3 wherein said colourant, present in a concentration of 0.01% to 0.1% by wt. of the total weight of said composition, is a pigment based on iron oxides.

15. Compositions capable of completely removing resinous coatings from essentially metallic substrates, containing:
a) from 5% to 30% by wt. hydrogen peroxide,
b) from 20% to 50% by wt. water,
c) from 5% to 20% by wt. gamma-butyrolactone,
d) from 20% to 50% by wt. benzyl alcohol,
and, optionally, at least one of the following additives, i.e. corrosion inhibitors, thickeners, surfactants and colouring agents, formulated in the form of two separate components, which may be mixed immediately prior to use, wherein component A contains benzyl alcohol, gamma-butyrolactone and optionally at least one of the additives mentioned above, and the second component, B, consists of a 35% aqueous solution of hydrogen peroxide.

16. Process for the application of the composition as claimed in claim 15 consisting of the following steps:
i) components A and B, in weight ratios ranging from 100:50 to 100:30, are fed through separate suction pumps to an appropriate mixer where mixing of said components takes place;
ii) the resulting composition is applied by spray gun to the substrate wherefrom the paint is to be removed.

17. The process as claimed in claim 16, wherein said component A/component B ratio equals 100:40 by weight.

18. The process according to claim 16, for removing primer and finish based on epoxy and polyurethane paints from large-sized metallic surfaces.

19. The process according to claim 16, wherein said metallic surfaces are constructed of aluminium alloys.

20. The process according to claim 16, wherein said metallic surfaces are aircraft's.

21. The process according to claim 16, for removing acrylic and vinyl paints.

## Patentansprüche

1. Zusammensetzungen, die harzige Beschichtungen von im wesentlichen metallischen Substraten komplett entfernen können, enthaltend Wasserstoffperoxid und γ-Butyrolaceton, und dadurch gekennzeichnet sind, daß in Anwesenheit von Benzylalkohol als hauptsächlichem organischen Lösungsmittel der Gehalt an γ-Butyrolaceton niedriger oder gleich 20 Gew.% des Gesamtgewichts der Zusammensetzung ist.

2. Zusammensetzungen, die harzige Beschichtungen von im wesentlichen metallischen Substraten komplett entfernen können, enthaltend:
a) von 5 Gew.% bis 30 Gew.% Wasserstoffperoxid
b) von 20 Gew.% bis 50 Gew.% Wasser
c) von 5 Gew.% bis 20 Gew.% γ-Butyrolaceton
d) von 20 Gew.% bis 50 Gew.% Benzylalkohol.

3. Zusammensetzungen gemäß Anspruch 2, enthaltend wenigstens eine der folgenden Arten an Zusatzstoffen: Korrosionsinhibitoren, Verdickungsmittel, Tenside und Farbmittel.

4. Zusammensetzungen gemäß Anspruch 3, enthaltend wenigstens eine der folgenden Arten von Verdickungsmitteln: Zellulosederivate, pyrogenes, amorphes, zur Wasserabstossung behandeltes Siliziumdioxid, wenigstens eine Polyacrylamiddispersion in Mineralöl, wäßrige Dispersionen von Acrylpolymeren oder wäßrige Emulsionen von nicht-ionenbildenden Polyurethanen.

5. Zusammensetzungen gemäß Anspruch 3, wobei die Zellulosederivate ausgewählt sind aus der Gruppe bestehend aus Hydroxypropylzellulose, Ethylzellulose, Methylzellulose.

6. Zusammensetzungen gemäß Anspruch 4, zur gleichen Zeit enthaltend:
- 0,1 Gew.% bis 3 Gew.% Hydroxypropylzellulose mit einem durchschnittlichen Molekulargewicht im Bereich von 100.000 bis 1.200.000, bezogen auf das Gesamtgewicht der Zusammensetzungen,
- 0,1 Gew.% bis 2 Gew.% amorphes Siliziumdioxid, welches wasserabstossend mit Silikonöl gemacht wurde, bezogen auf das Gesamtgewicht der Zusammensetzungen,
- 1 Gew.% bis 5 Gew.% eines oder mehrerer Polyacrylamiddispersionen in Mineralöl, bezogen auf das Gesamtgewicht der Zusammensetzungen.

7. Zusammensetzungen gemäß Anspruch 4, zur gleichen Zeit enthaltend:
- 0,1 Gew.% bis 3 Gew.% Hydroxypropylzellulose mit einem durchschnittlichen Molekulargewicht im Bereich von 100.000 bis 1.200.000, bezogen auf das Gesamtgewicht der Zusammensetzungen,
- 0,1 Gew.% bis 2 Gew.% amorphes Siliziumdioxid, welches wasserabstossend mit Silikonöl gemacht wurde, bezogen auf das Gesamtgewicht der Zusammensetzungen,
- wäßrige Dispersionen von Acrylpolymeren oder wäßrige Polyurethanemulsionen, vorausgesetzt, daß die Konzentration der wäßrigen Dispersionen oder Emulsionen nicht 5 % überschreitet.

8. Zusammensetzungen gemäß Anspruch 3, enthaltend wenigstens eine der folgenden Arten von Korrosionsinhibitoren: Butindiolhydroxyethylether, Gallus- und Metadigallussäure glykosidische Ester, Calciumsilikat, Natriumpolyphosphat, Thioharnstoff in Propargylalkohol in 50 %iger Konzentration und metallische Phosphate.

9. Zusammensetzungen gemäß Anspruch 8, enthaltend die folgenden Korrosionsinhibitoren: 1,4-Bis(2-hydroxyethoxy)-2-butin, Natriumpolyphosphat, Thioharnstoff in Propargylalkohol und Calciumsilikat, die Gesamtkonzentration von jedem Korrosionsinhibitor ist im Bereich von 2 Gew.% bis 10 Gew.%, bezogen auf das Gesamtgewicht der Zusammensetzungen.

10. Zusammensetzungen gemäß Anspruch 8, enthaltend die folgenden Korrosionsinhibitoren: Zinkphosphat, aktiviert mit Zinkmolybdat, Zinkphosphat, modifiziert mit einer organischen Komponente, oder Mischungen davon, und ggf. 1,4-Bis(2-hydroxyethoxy)-2-butin; die Gesamtkonzentration der Korrosionsinhibitoren in der endgültigen Zusammensetzung darf nicht 15 Gew.% überschreiten.

11. Zusammensetzungen gemäß Anspruch 10, enthaltend weiterhin metallische Borate in Konzentrationen niedriger oder gleich 10 Gew.%.

12. Zusammensetzungen gemäß Anspruch 3, enthaltend wenigstens eine der folgenden Arten von Tensiden: N-Alkyl-pyrrolidon, bei der die Alkylgruppe 8 bis 18 Kohlenstoffatome enthält, und Natriumcaprylamphohydroxypropylsulphonat.

13. Zusammensetzungen gemäß Anspruch 12, enthaltend die folgenden Tenside: N-Dodecyl-pyrrolidon und Natriumcaprylamphohydroxypropylsulphonat; die Gesamtkonzentration der Tenside ist im Bereich von 1 Gew.% bis 5 Gew.%, bezogen auf das Gesamtgewicht der Zusammensetzungen.

14. Zusammensetzungen gemäß Anspruch 3, wobei das Farbmittel, das in einer Konzentration von 0,01 Gew.% bis 0,1 Gew.%, bezogen auf die Gesamtmenge der Zusammensetzung, vorliegt, ein auf Eisenoxid basierendes Pigment ist.

15. Zusammensetzungen, die harzige Beschichtungen von im wesentlichen metallischen Substraten komplett entfernen können, enthaltend:
a) von 5 Gew.% bis 30 Gew.% Wasserstoffperoxid
b) von 20 Gew.% bis 50 Gew.% Wasser
c) von 5 Gew.% bis 20 Gew.% γ-Butyrolaceton
d) von 20 Gew.% bis 50 Gew.% Benzylalkohol,
und ggf. wenigstens einen der folgenden Zusatzstoffe, d.h. Korrosionsinhibitoren, Verdickungsmittel, Tenside und Farbmittel, formuliert in Form von zwei getrennten Komponenten, die genau vor der Verwendung zusammengemischt werden können, wobei Komponente A Benzylalkohol, γ-Butyrolaceton und ggf. wenigstens einen der obengenannten Zusatzstoffe enthält, und die zweite Komponente B aus einer 35 %igen wäßrigen Lösung von Wasserstoffperoxid besteht.

16. Verfahren zur Anwendung der Zusammensetzung gemäß Anspruch 15, bestehend aus den folgenden Schritten:
i) Komponenten A und B in einem Gewichtsverhältnis im Bereich von 100:50 zu 100:30 werden durch getrennte Saugpumpen zu einem geeigneten Mixer zugeführt, wo das Mischen dieser Komponenten stattfindet;
ii) die erhaltene Zusammensetzung wird durch eine Sprühpistole auf das Substrat, von dem der Lack entfernt werden soll, aufgegeben.

17. Verfahren gemäß Anspruch 16, worin das Verhältnis der Komponente A/Komponente B 100:40, bezogen auf das Gewicht, entspricht.

18. Verfahren gemäß Anspruch 16 zur Entfernung von Grundierung- und Oberflächenlack, die auf Epoxy- und Polyurethanlacken basieren, von großflächigen Metalloberflächen.

19. Verfahren gemäß Anspruch 16, worin die Metalloberflächen aus Aluminiumlegierungen hergestellt werden.

20. Verfahren gemäß Anspruch 16, worin die Metalloberflächen Flugzeuge sind.

21. Verfahren gemäß Anspruch 16 zur Entfernung von Acryl- und Vinyllacken.

## Revendications

1. Compositions capables d'éliminer complètement des revêtements résineux de substrats essentiellement métalliques, contenant du peroxyde d'hydrogène et de la gamma-butyrolactone et étant caractérisées par la présence d'alcool benzylique en tant que principal solvant organique, la teneur en ladite gamma-butyrolactone étant inférieure ou égale à 20% en poids par rapport au poids total desdites compositions.

2. Compositions capables d'éliminer complètement des revêtements résineux de substrats essentiellement métalliques, contenant :
a) de 5% à 30% en poids de peroxyde d'hydrogène ;
b) de 20% à 50% en poids d'eau ;
c) de 5% à 20% en poids de gamma-butyrolactone ;
d) de 20% à 50% en poids d'alcool benzylique.

3. Compositions suivant la revendication 2, contenant au moins l'un des types suivants d'additifs : inhibiteurs de corrosion, épaississants, tensioactifs et agents colorants.

4. Compositions suivant la revendication 3, contenant au moins l'un des types suivants d'épaississants : dérivés cellulosiques, silice amorphe pyrogène traitée pour présenter un caractère hydrofuge, au moins une dispersion de polyacrylamide dans une huile minérale, des dispersions aqueuses de polymères acryliques ou des émulsions aqueuses de polyuréthanes non ionogènes.

5. Compositions suivant la revendication 3, dans lesquelles les dérivés cellulosiques sont choisis dans le groupe consistant en hydroxypropyl cellulose, éthyl cellulose, méthyl cellulose.

6. Compositions suivant la revendication 4, contenant en même temps :
- 0,1% à 3% en poids, calculés par rapport au poids total desdites compositions, d'hydroxypropyl cellulose ayant un poids moléculaire moyen compris dans la gamme de 100 000 à 1 200 000
- 0,1% à 2% en poids, calculés par rapport au poids total desdites compositions, de silice amorphe rendue hydrofuge avec une huile silicone ;
- 1% à 5% en poids, calculés par rapport au poids total desdites compositions, d'une ou plusieurs dispersions de polyacrylamide dans une huile minérale.

7. Compositions suivant la revendication 4, contenant en même temps :
- 0,1% à 3% en poids, calculés par rapport au poids total desdites compositions, d'hydroxypropyl cellulose ayant un poids moléculaire moyen compris dans la gamme de 100 000 à 1 200 000
- 0,1% à 2% en poids, calculés par rapport au poids total desdites compositions, de silice amorphe rendue hydrofuge avec une huile silicone ;
- des dispersions aqueuses de polymères acryliques ou des émulsions aqueuses de polyuréthane, à condition que la concentration desdites dispersions ou émulsions aqueuses ne dépasse pas 5%.

8. Compositions suivant la revendication 3, contenant au moins l'un des types suivants d'inhibiteurs de corrosion : hydroxyéthyléthers de butynediol, esters glycosidiques d'acide gallique et d'acide métadigallique, silicate de calcium, polyphosphate de sodium, thiourée dans de l'alcool progargylique à une concentration de 50%, et phosphates métalliques.

9. Compositions suivant la revendication 8, contenant les inhibiteurs de corrosion suivants : 1,4-bis-(2-hydroxyéthoxy)-butyne, polyphosphate de sodium, thiourée dans l'alcool progargylique et silicate de calcium, la concentration totale de chaque inhibiteur de corrosion devant être comprise dans une gamme de 2% à 10% en poids par rapport au poids total desdites compositions.

10. Compositions suivant la revendication 8, contenant les inhibiteurs de corrosion suivants : phosphate de zinc activé par du molybdate de zinc, phosphate de zinc modifié par un composant organique, ou leurs mélanges, et éventuellement 1,4-bis-(2-hydroxyéthoxy)-butyne, la concentration totale desdits inhibiteurs de corrosion dans la composition finale ne devant pas dépasser 15% en poids.

11. Compositions suivant la revendication 10, contenant aussi des borates métalliques à des concentrations inférieures ou égales à 10% en poids.

12. Compositions suivant la revendication 3, contenant au moins l'un des types suivants de tensioactifs : N-alkyl-pyrrolidone dans laquelle le groupe alkyle contient 8 à 18 atomes de carbone, et caprylamphohydroxypropylsulfonate de sodium.

13. Compositions suivant la revendication 12, contenant les tensioactifs suivants : N-dodécyl-pyrrolidone et caprylamphohydroxypropylsulfonate de sodium, la concentration totale desdits tensioactifs devant être comprise dans la gamme de 1% à 5% du poids total desdites compositions.

14. Compositions suivant la revendication 3, dans lesquelles ledit colorant, présent en une concentration de 0,01% à 0,1% en poids par rapport au poids total desdites compositions, est un pigment à base d'oxydes de fer.

15. Compositions capables d'éliminer complètement des revêtements résineux de substrats essentiellement métalliques, contenant :
a) de 5% à 30% en poids de peroxyde d'hydrogène ;
b) de 20% à 50% en poids d'eau ;
c) de 5% à 20% en poids de gamma-butyrolactone ;
d) de 20% à 50% en poids d'alcool benzylique.
et, éventuellement, au moins l'un des additifs suivants, c'est-à-dire des inhibiteurs de corrosion, des épaississants, des tensioactifs et des agents colorants, formulées sous la forme de deux composants séparés qui peuvent être mélangés immédiatement avant emploi, dans lesquelles le composant A contient l'alcool benzylique, la gamma-butyrolactone et éventuellement au moins l'un des additifs mentionnés plus haut, et le second composant, B, consiste en une solution aqueuse à 35% de peroxyde d'hydrogène.

16. Procédé pour l'application de la composition suivant la revendication 15, comprenant les étapes suivantes :
i) les composants A et B, selon des rapports en poids compris dans la gamme de 100:50 à 100:30, sont introduits par des pompes d'aspiration séparées dans un mélangeur approprié dans lequel a lieu le mélange desdits composants ;
ii) la composition résultante est appliquée par un pistolet à pulvériser sur le substrat dont la peinture doit être enlevée.

17. Procédé suivant la revendication 16, dans lequel ledit rapport du composant A au composant B est de 100:40 en poids.

18. Procédé suivant la revendication 16, pour éliminer une couche de base et une couche de finition à base de peintures époxy et polyuréthane de surfaces métalliques de grande dimension.

19. Procédé suivant la revendication 16, dans lequle lesdites surfaces métalliques sont construites d'alliages d'aluminium.

20. Procédé suivant la revendication 16, dans lequel lesdites surfaces métalliques sont des surfaces d'avion.

21. Procédé suivant la revendication 16, pour éliminer des peintures acryliques et vinyliques.
